# EUROPEAN PATENT SPECIFICATION

(11) **EP 3 547 632 B1**
(45) Date of publication and mention of the grant of the patent: **02.06.2021**
(21) Application number: 17881393.7
(22) Date of filing: 26.01.2017
(51) Int. Cl.: H04L 29/00, H04L 5/00, H04W 56/00

(54) **METHOD FOR TERMINAL COMMUNICATION**
VERFAHREN ZUR ENDGERÄTEKOMMUNIKATION
PROCÉDÉ DE COMMUNICATION DE TERMINAL

(30) Priority: 14.12.2016 CN 201611155230
(43) Date of publication of application: 02.10.2019
(73) Proprietor: Huawei Technologies Co., Ltd., Longgang District Shenzhen, Guangdong 518129 (CN)
(72) Inventor: ZENG, Yongbo, Shenzhen, Guangdong 518129 (CN); CAI, Yu, Shenzhen, Guangdong 518129 (CN); WANG, Da, Shenzhen, Guangdong 518129 (CN)
(74) Representative: Gill Jennings & Every LLP
(86) International application number: PCT/CN2017/072756
(87) International publication number: WO 2018/107570

(56) References cited:
- CN-A- 104 735 718
- CN-A- 105 681 439
- CN-A- 105 722 131
- CN-A- 107 046 461
- US-A1- 2010 036 964
- US-A1- 2010 322 177
- US-A1- 2012 236 706
- US-A1- 2013 198 545
- US-A1- 2016 285 935

## Description

### TECHNICAL FIELD

This application relates to the electrical field, and in particular, to a terminal communication method, a computer readable storage medium, and a computer program product.

### BACKGROUND

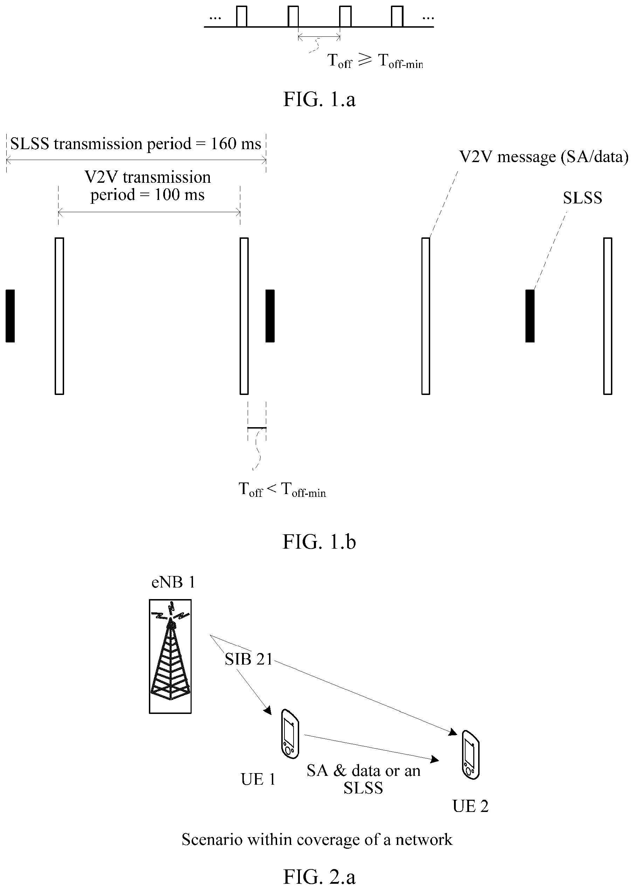

An Internet of Vehicles (Long Term Evolution Vihicle to Everything, LTE-V2X) technology of the 3^{rd} Generation Partnership Project (the 3^{rd} Generation Partnership Project, 3GPP) and a dedicated short range communication (Dedicated Short Range Communication, DSRC) technology may share a 5.9-GHz frequency band as a working frequency. To avoid a channel congestion problem caused by an excessive quantity of messages sent when a terminal density is relatively high, the European Telecommunications Standards Institute defines some constraint conditions, including restricting a minimum time interval between two adjacent transmissions, for a sending behavior of a DSRC terminal on a 5.9-GHz frequency band to restrict a time for which and a ratio at which the terminal occupies a channel. As shown in FIG. 1.a, a time interval between two adjacent transmissions is T_{off}, and a minimum time interval between the two adjacent transmissions is defined as T_{off-min}, to be specific, a constraint condition is *T_{off}* ≥ *T*_{*off*-*min*}.

The Internet of Vehicles V2X includes vehicle to vehicle (Vehicle to Vehicle, V2V) communication, pedestrian to vehicle (Pedestrian to Vehicle, P2V) communication, vehicle to pedestrian (Vehicle to Pedestrian, V2P) communication, and vehicle to infrastructure (Vehicle to Infrastructure, V2I) communication. The V2I communication may also be referred to as vehicle to network (Vehicle to Network, V2N) communication. A terminal (User Equipment, UE) of the Internet of Vehicles may be an in-vehicle terminal or a handheld terminal. The UE may send a sidelink synchronization signal (Sidelink Synchronization Signal, SLSS), scheduling assignment (Scheduling Assignment, SA), and data (Data). Strictly, the SLSS includes only a primary sidelink synchronization signal (Primary Sidelink Synchronization Signal, PSSS) and a secondary sidelink synchronization signal (Secondary Sidelink Synchronization Signal, SSSS). Because the PSSS, the SSSS, and a broadcast message of a physical sidelink broadcast channel (Physical Sidelink Broadcast channel, PSBCH) are transmitted in a same subframe, both the PSSS and the SSSS are represented by using the SLSS unless otherwise specified. When the terminal sends an SLSS, it implies that the terminal also sends a broadcast message on a PSBCH channel in a same subframe when a condition defined in an existing standard is satisfied. In addition, the scheduling assignment is also referred to as sidelink control information (Sidelink Control Information, SCI). In this application, the scheduling assignment and the data are collectively referred to as a V2X message. Currently, one SA transmission of a same transport block (Transport Block, TB) and a corresponding data transmission are performed in a same subframe. Due to different periods, different transmission moment offsets, and the like between an SLSS transmission or a V2X message transmission, a time interval between two adjacent transmissions may disobey the constraint condition *T_{off}*≥ *T_{off-min}*. In LTE-V2X, an SLSS transmission period is constantly 160 ms, and a V2X message transmission period may be {20 ms, 50 ms, n * 100 ms}, where n = 1, 2, ..., or 10. Therefore, as shown in FIG. 1.b, when the UE needs to send an SLSS and SA & data, and the V2X message transmission period is 100 ms, in a transmission process, an interval T_{off} between some transmissions is less than T_{off-min.} Consequently, the T_{off-min} constraint is broken.

In view of this, a solution provided in the prior art is to set a priority of an SA/data transmission higher than a priority of an SLSS transmission in a transmission process, so that when the T_{off-min} constraint is broken, the SLSS transmission is discarded.

However, for a receiving terminal out of coverage (Out of Coverage, OoC) of a network, the SLSS is used to ensure synchronization between terminals of the Internet of Vehicles, and is a very important signal. Synchronization performance of a receive terminal may be affected if a sending terminal discards the SLSS when the T_{off-min} constraint is broken. In addition, in the prior art, the solution in which when the T_{off-min} constraint is broken, the SLSS transmission is directly discarded is excessively simple.

US 2013/0198545 relates to methods of spreading plurality of interrupts, interrupt request signal spreader circuits, and systems-on-chips having the same.

### SUMMARY

The invention is captured in the appended claims.

The invention provides a solution to enrich solutions to a transmission conflict when a constraint rule is broken, to be specific, when the transmission conflict occurs.

Various aspects of the present disclosure have been defined in the independent claims. Further technical features of each of these aspects have been defined in the respective dependent claims.

In the technical solutions provided in the examples of this application, when the sending interval between the two adjacent signals that are to be sent at the discontinuous time intervals is less than the first preset value, the sending terminal determines the adjustment manner; and the sending terminal adjusts the at least one of the two adjacent signals based on the adjustment manner. The adjustment manner includes adjusting the transmission moment of the signal. In the examples of this application, when the sending interval between the two adjacent signals that are to be sent at the discontinuous time intervals is less than the first preset value, the sending terminal adjusts, based on the determined adjustment manner, the at least one of the two adjacent signals between which a transmission conflict occurs, thereby enriching solutions to a transmission conflict.

### BRIEF DESCRIPTION OF DRAWINGS

FIG. 1.a is a schematic diagram of a constraint rule according to an embodiment of this application;
FIG. 1.b is a schematic diagram of a conflict scenario according to an embodiment of this application;
FIG. 2.a is a schematic diagram of a system architecture according to an embodiment of this application;

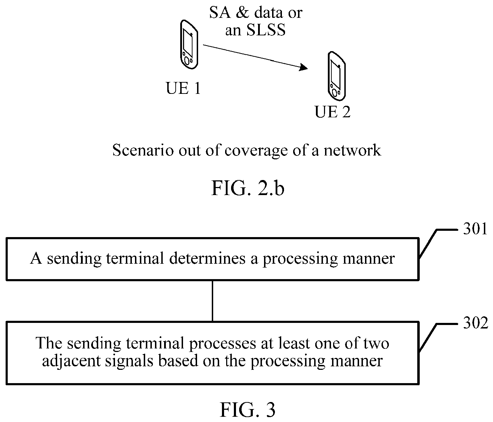

FIG. 2.b is another schematic diagram of a system architecture according to an embodiment of this application;
FIG. 3 is a schematic diagram of an embodiment of a terminal communication method according to embodiments of this application;

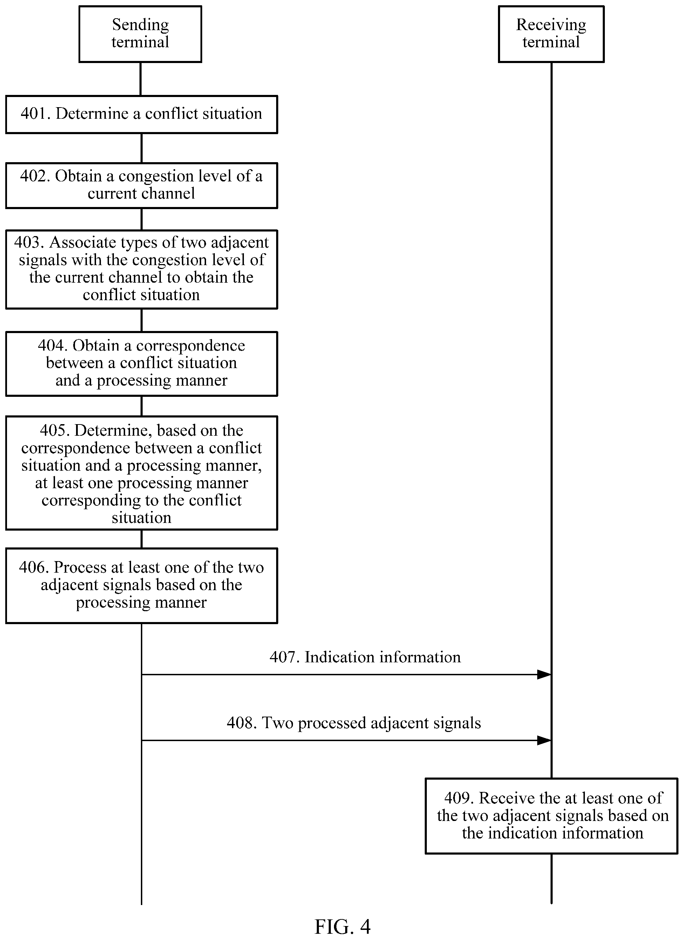

FIG. 4 is a schematic diagram of another embodiment of a terminal communication method according to embodiments of this application;

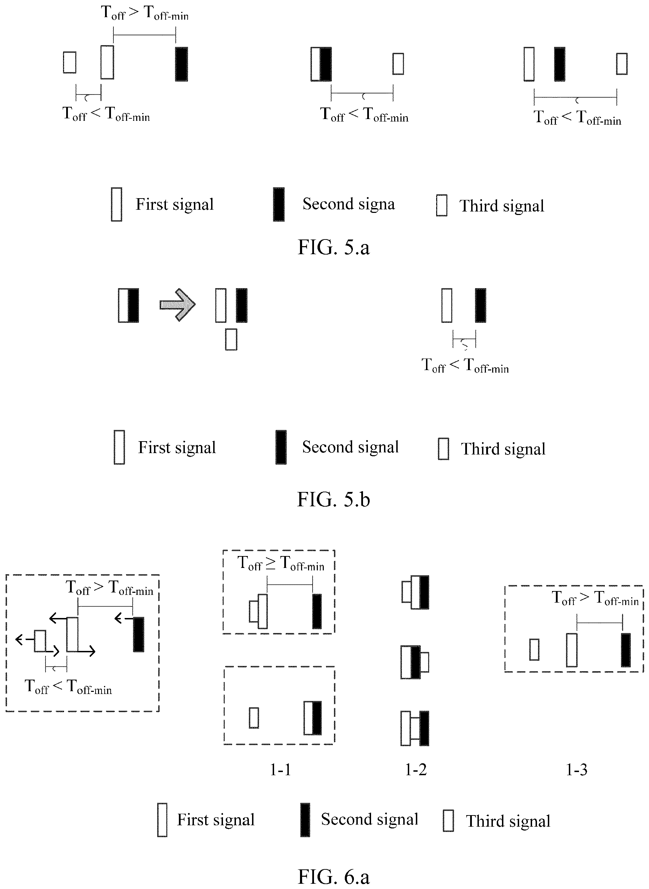

FIG. 5.a is a diagram of a conflict scenario of a terminal communication method according to an embodiment of this application;
FIG. 5.b is a diagram of another conflict scenario of a terminal communication method according to an embodiment of this application;

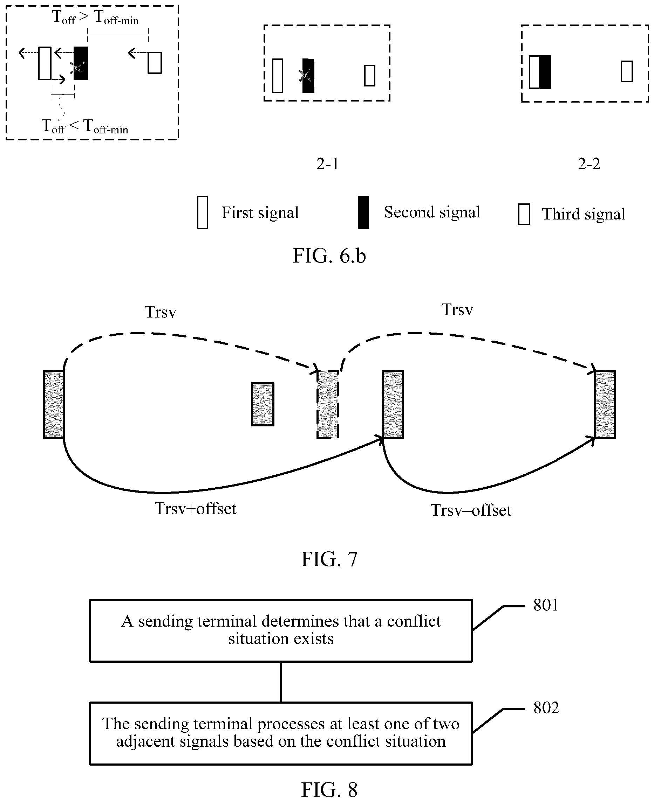

FIG. 6.a is a diagram of a processing manner of a terminal communication method according to an embodiment of this application;
FIG. 6.b is a diagram of another processing manner of a terminal communication method according to an embodiment of this application;
FIG. 7 is a schematic indication diagram of a terminal communication method according to an embodiment of this application;
FIG. 8 is a schematic diagram of another embodiment of a terminal communication method according to embodiments of this application;

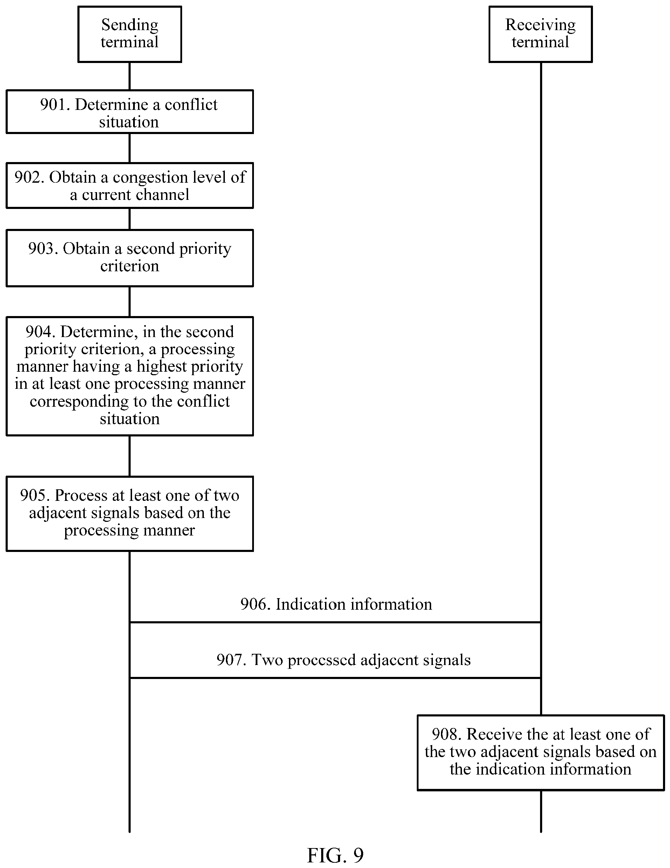

FIG. 9 is a schematic diagram of another embodiment of a terminal communication method according to embodiments of this application;

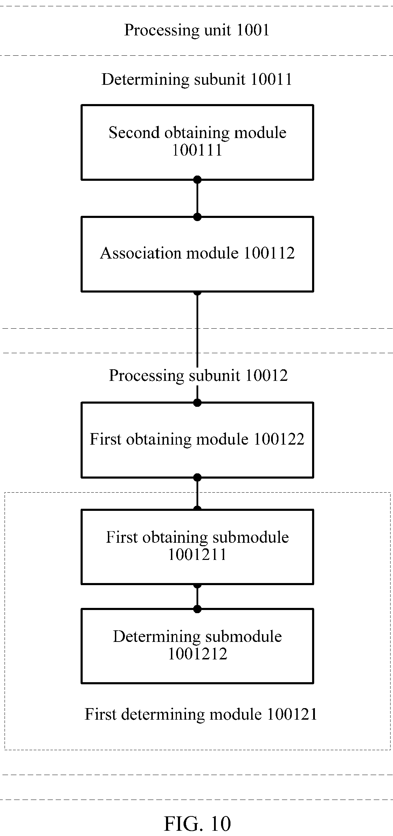

FIG. 10 is a schematic diagram of an embodiment of a sending terminal according to embodiments of this application;

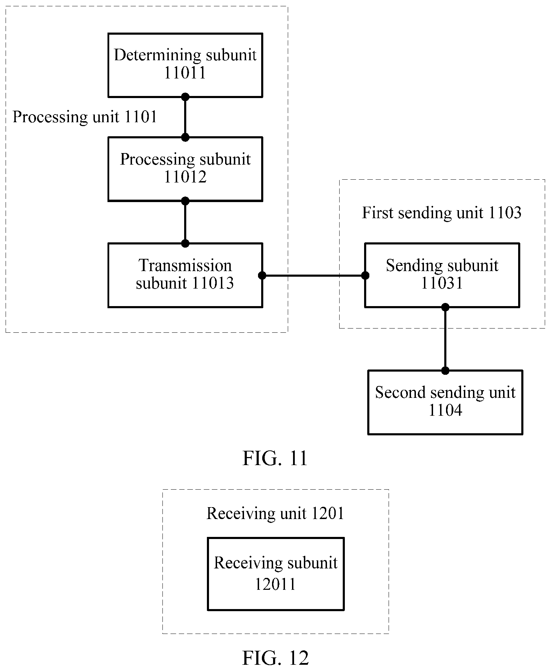

FIG. 11 is a schematic diagram of another embodiment of a sending terminal according to embodiments of this application;
FIG. 12 is a schematic diagram of an embodiment of a receiving terminal according to embodiments of this application;

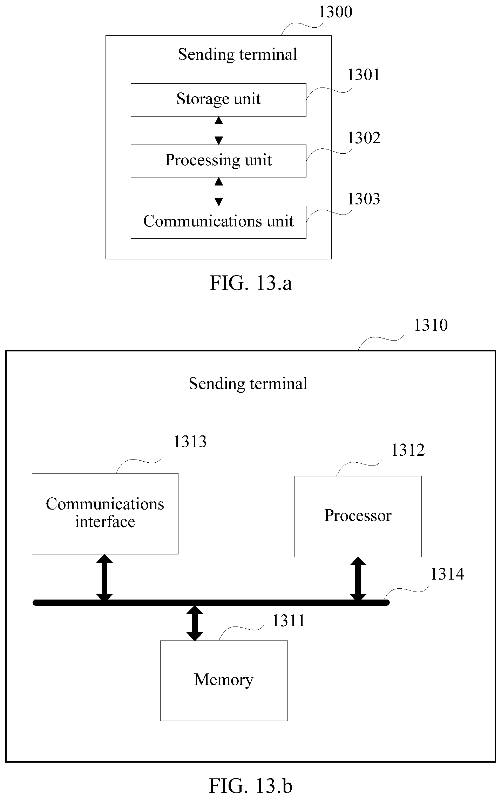

FIG. 13.a is a schematic block diagram of a sending terminal according to an embodiment of this application;
FIG. 13.b is a schematic structural diagram of a sending terminal according to an embodiment of this application; and

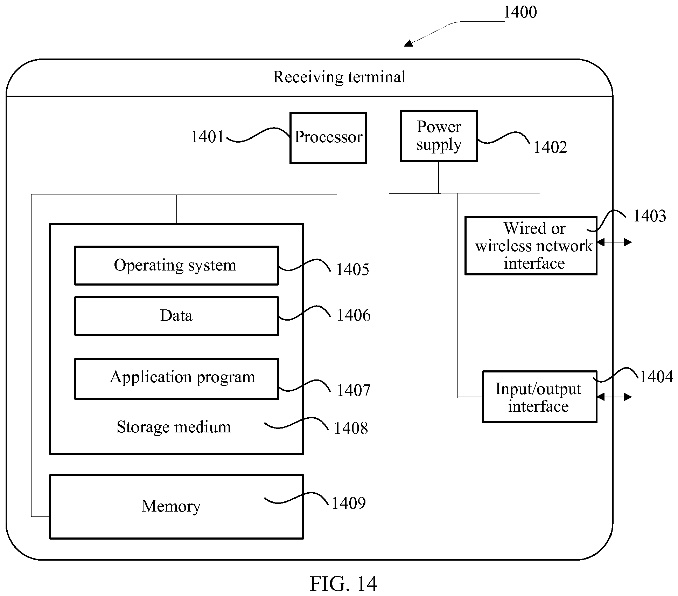

FIG. 14 is a schematic diagram of another embodiment of a receiving terminal according to embodiments of this application.

### DESCRIPTION OF EXAMPLES

In the specification, claims, and accompanying drawings of this application, the terms "first", "second", "third", "fourth", and so on (if existing) are intended to distinguish between similar objects but do not necessarily indicate a specific order or sequence. It should be understood that the data termed in such a way are interchangeable in proper circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

Embodiments of this application may be applied to system architectures shown in FIG. 2.a and FIG. 2.b. FIG. 2.a shows a scenario within coverage of a network. An evolved NodeB eNB 1 sends a broadcast message to UE 1 and UE 2. The broadcast message is included in a SIB 21. The SIB 21 includes some configuration parameters, such as a resource configuration, in a V2X communication process. The sending terminal UE 1 sends a V2X message or an SLSS to the receiving terminal UE2, and the V2X message includes SA & data. FIG. 2.b shows a scenario out of coverage of a network, to be specific, a sending terminal UE 1 and a receiving terminal UE 2 are out of coverage of a base station. The sending terminal UE 1 sends SA & data or an SLSS to the receiving terminal UE 2, but cannot receive a broadcast message and the like sent by the base station. In this scenario, configurations of some parameters may be pre-configured. For example, an offset is pre-configured.

The following describes a procedure of an embodiment of this application. Referring to FIG. 3, an embodiment of a terminal communication method according to the embodiments of this application includes the following steps.

301. A sending terminal determines a processing manner.

When a sending interval between two adjacent signals that are to be sent at discontinuous time intervals is less than a first preset value, the sending terminal determines the processing manner of the two adjacent signals. The two adjacent signals may be any two of a first signal, a possible second signal, and a third signal. The second signal is a retransmitted signal in the first signal. The first signal carries control information and data information. The third signal is a signal having a constant transmission period. In this embodiment of this application, the processing manner includes at least one or more of the following optional processing manners: adjusting a transmission moment of the first signal, adjusting a transmission moment of the second signal, adjusting a transmission moment of the third signal, discarding the second signal, or discarding the second signal and adjusting an MCS value of the first signal.

A base station may notify the sending terminal of the determining on the processing manner by using a broadcast message, or the sending terminal uses a pre-configured rule. This is not specifically limited herein.

302. The sending terminal processes at least one of the two adjacent signals based on the processing manner.

After the sending terminal determines the processing manner, when the two adjacent signals that are to be sent are the first signal and the third signal, the sending terminal adjusts a transmission moment of at least one of the two adjacent signals based on the determined processing manner. When the two adjacent signals that are to be sent include the second signal, the sending terminal performs adjustment based on the determined processing manner. The processing manner includes at least one of the following optional processing manners: adjusting a transmission moment of at least one of the two adjacent signals, discarding the second signal, or discarding the second signal and adjusting the MCS value of the first signal.

The sending terminal adjusts the sending moment of the at least one of the two adjacent signals, so that the sending interval between the two adjacent signals at the discontinuous time intervals is greater than the first preset value; or so that the two adjacent signals that are to be sent at the discontinuous time intervals are adjusted to be sent at two continuous time intervals.

In this embodiment of this application, the time interval may be understood as a subframe. When the sending interval between the two adjacent signals that are to be sent at the discontinuous time intervals is less than the first preset value, the sending terminal adjusts, based on a determined adjustment manner, the at least one of the two adjacent signals between which a transmission conflict occurs, and the adjustment manner includes adjusting the transmission moment of the signal. Compared with discarding the third signal in the prior art, in this embodiment of this application, a transmission moment of a signal is adjusted when a transmission conflict occurs, thereby ensuring synchronization performance of a receiving terminal.

For ease of understanding, the following describes a specific procedure of an embodiment of this application. Referring to FIG. 4, another embodiment of a terminal communication method according to the embodiments of this application includes the following steps.

401. A sending terminal determines a conflict situation.

The sending terminal reserves resources for a plurality of signal transmissions during a signal transmission. Therefore, the sending terminal can pre-determine, based on a sending interval between any two adjacent signals that are to be sent at discontinuous time intervals, whether a transmission conflict occurs. In this embodiment of this application, the time interval may be understood as a subframe. When the sending terminal determines that the sending interval between the two adjacent signals at the discontinuous time intervals is less than a first preset value, to be specific, a transmission conflict occurs between the two adjacent signals. Further, to resolve the transmission conflict, the sending terminal first needs to determine a conflict situation between the two adjacent signals between which the sending interval is less than the first preset value. The conflict situation may include at least one of the following: locations of the two signals between which the transmission conflict occurs, types of the two signals, a transmission delay requirement, a congestion level of a current channel, an available resource, or the like. This is not specifically limited herein. For ease of understanding, in this embodiment of this application, an example in which the conflict situation includes the types of the two signals between which the transmission conflict occurs and the congestion level of the current channel is used for description.

In this embodiment of this application, a signal sent by the sending terminal includes at least a first signal, a possible second signal, or a third signal. The second signal is a retransmitted signal in the first signal. The first signal and the second signal both carry control information and data information. The third signal is a signal having a constant transmission period. For example, in Internet of Vehicles communication, the first signal may be SA & data, the second signal is a retransmitted signal in the SA & the data, and the third signal is an SLSS. The sending terminal may be classified into a terminal that transmits the third signal and a terminal that does not transmit the third signal. When the sending terminal is a terminal that transmits the third signal, a scenario in which a conflict occurs is shown in FIG. 5.a. The first signal is represented by using a long white block, the second signal is represented by using a long black block, and the third signal is represented by using a short block. The conflict scenario includes: A transmission conflict occurs between the first signal and the third signal, a transmission conflict occurs between the second signal and the third signal, and a transmission conflict occurs between the first signal and the second signal and the third signal. If the sending terminal is a terminal that does not transmit the third signal, a scenario in which a conflict occurs is shown in FIG. 5.b. When the first signal and the second signal are sent at continuous time intervals in a logical resource pool, to be specific, in continuous subframes, the first signal and the second signal are separated in a physical resource pool by the third signal sent by another terminal. Consequently, a sending interval between the first signal and the second signal that are adjacent to each other is less than the first preset value, or currently, the sending interval between the first signal and the second signal is randomly selected from 0 to 15 subframes, to be specific, the sending interval T_{off} between the first signal and the second signal ranges from 0 ms to 15 ms, and the sending interval *T_{off}* < *T*_{*off*-}*ₘᵢₙ.*

402. The sending terminal obtains a congestion level of a current channel.

In actual application, a congestion degree may be represented by using a channel busy ratio (Channel busy ratio, CBR). The CBR is a ratio of a time for which a channel is in a busy state caused by a successful data transmission or a collision to a total time within a time interval, and may provide an early alarm for network congestion. The CBR may be defined as a ratio of subchannels of which a received signal strength indication (Sidelink-Received Signal Strength Indication, S-RSSI) exceeds a pre-configured or network-configured threshold within an observation time. The ratio of subchannels is positively correlated with the congestion degree. To be specific, a higher ratio of subchannels indicates a higher congestion degree, and a lower ratio of subchannels indicates a lower congestion degree.

The sending terminal determines the congestion level of the current channel by comparing whether a CBR of the current channel is greater than a second preset value. The current channel is a physical sidelink shared channel (Physical Sidelink Shared Channel, PSSCH). The congestion level may be classified into at least a first congestion level and a second congestion level based on different congestion degrees. The first congestion level is used to indicate that a CBR of a channel is less than the second preset value. The second congestion level is used to indicate that a CBR of a channel is greater than the second preset value.

Optionally, in actual application, the congestion level may include a plurality of levels. For example, a congestion level of a channel is classified into three levels, which are respectively used to indicate that a CBR of the channel is less than a third preset value, the CBR of the channel is greater than the third preset value and is less than a fourth preset value, and the CBR of the channel is greater than the fourth preset value. Therefore, a quantity of congestion levels of a channel is not specifically limited herein.

The congestion level may be obtained through measurement by the sending terminal, or may be obtained by the sending terminal from a broadcast message of a base station.

403. The sending terminal associates types of two adjacent signals with the congestion level of the current channel to obtain the conflict situation.

After determining that the conflict situation exists and obtaining the congestion level of the current channel, the sending terminal associates the congestion level of the current channel with the types of the two adjacent signals between which the transmission conflict occurs, to obtain the conflict situation. For example, if the types of the two adjacent signals are the first signal and the second signal, and the congestion level of the current channel is the first congestion level, the conflict situation is that the transmission conflict occurs between the first signal and the second signal and the congestion level is the first congestion level.

404. The sending terminal obtains a correspondence between a conflict situation and a processing manner.

The sending terminal receives broadcast information sent by the base station. The broadcast information carries the correspondence between a conflict situation and a processing manner.

It should be noted that there are a plurality of manners of obtaining the correspondence by the sending terminal. For example, the sending terminal obtains the correspondence from pre-configured or pre-stored information. Therefore, a manner of obtaining the correspondence between a conflict situation and a processing manner by the sending terminal is not specifically limited herein.

In this embodiment of this application, the processing manner includes at least one or more of the following optional processing manners: adjusting a transmission moment of the first signal, adjusting a transmission moment of the second signal, adjusting a transmission moment of the third signal, or discarding the second signal. Adjusting a transmission moment of a signal includes antedating or postponing the transmission moment of the signal.

It may be understood that in actual application, a requirement needs to be satisfied when the transmission moment of the signal is adjusted. For example, a delay requirement is satisfied, to be specific, a time interval from generating a signal to sending the signal does not exceed a predetermined value, and an adjustment value of the transmission moment of the signal may be configured by the sending terminal or the base station. A configuration manner may be that an adjustment value is a minimum offset value that satisfies a T_{off-min} requirement and the delay requirement that are defined in a current standard, or an adjustment value is a random offset value plus the minimum offset value, to reduce transmission conflicts. The random offset value is a random value within a pre-configured offset range. Therefore, the configuration manner of the adjustment value is not specifically limited herein.

Optionally, when one of the two adjacent signals between which the transmission conflict occurs is the second signal, and the processing manner includes discarding the second signal, the sending terminal adjusts an MCS value of the data information carried in the first signal. A manner of adjusting the MCS value includes decreasing the MCS value or increasing the MCS value. Decreasing the MCS value can improve robustness of the first signal. The robustness is resistance to changes, and is a feature of a control system to maintain some performance with changes in parameters such as a structure and a size. Increasing the MCS value can reduce resource occupation, and reduce a congestion degree. In actual application, how to adjust the MCS value may be determined by the base station or determined by the base station based on a pre-configured condition. There are a plurality of manners of determining how to adjust the MCS value. For example, a priority of a message or service is determined, a manner of decreasing the MCS value is used for a message or service having a high priority, and a manner of increasing the MCS value is used for a message or service with a low priority; or the CBR of the current channel is determined, and if the CBR of the current channel is less than a preset value, a manner of decreasing the MCS value is used, or if the CBR of the current channel is greater than a preset value, a manner of increasing the MCS value is used; or a manner of decreasing the MCS value or increasing the MCS value may always be used. Therefore, the manner of adjusting the MCS value is not specifically limited herein.

It may be understood that, to ensure that processing manners of different terminals are consistent in a same conflict situation, various conflict situations correspond to one processing manner. The correspondence between a conflict situation and a processing manner may be shown in Table 1.

**Table 1**

| Sequence number | Conflict situation | Processing manner |
|---|---|---|
| 1 | A transmission conflict occurs between the first signal and the second signal and the congestion level is the first | Adjusting the transmission moment of the second signal |
| | congestion level | |
| 2 | A transmission conflict occurs between the first signal and the second signal and the congestion level is the second congestion level | Discarding the second signal |
| 3 | A transmission conflict occurs between the first signal and the third signal and the congestion level is the first congestion level | Adjusting the transmission moment of the first signal and the transmission moment of the third signal |
| 4 | A transmission conflict occurs between the first signal and the third signal and the congestion level is the second congestion level | Adjusting the transmission moment of the first signal |
| ... | ... | ... |

Optionally, the correspondence between a conflict situation and a processing manner may be stored in a form such as a table, a flexible document format, or a K-V format. This is not specifically limited herein.

It should be noted that, in actual application, the correspondence between a conflict situation and a processing manner may be defined by an operator based on an actual situation. For example, a conflict scenario is that a transmission conflict occurs between the first signal and the second signal and the congestion level is the first congestion level, and a corresponding adjustment manner is discarding the second signal. Therefore, the correspondence between a conflict situation and a processing manner is not specifically limited herein.

It should be noted that, in this embodiment, the sending terminal may obtain the conflict situation through step 401 and step 403, and may obtain the correspondence between a conflict situation and a processing manner through step 404. There is no chronological order in the two processes. Step 401 and step 403 may be performed first; or step 404 may be performed first; or step 401, step 403, and step 404 are simultaneously performed.

405. The sending terminal determines, based on the correspondence between a conflict situation and a processing manner, at least one processing manner corresponding to the conflict situation.

After obtaining the correspondence between a conflict situation and a processing manner, the sending terminal finds the at least one processing manner corresponding to the conflict situation obtained by the sending terminal in the correspondence, so that the sending terminal processes, in the at least one processing manner, at least one of the two adjacent signals between which the transmission conflict occurs.

406. The sending terminal processes at least one of the two adjacent signals based on the at least one processing manner.

After determining the at least one processing manner corresponding to the conflict situation, the sending terminal adjusts at least one of the two adjacent signals in the processing manner, so that the sending interval between the two adjacent signals at the discontinuous time intervals is greater than the first preset value; or the two adjacent signals are aggregated, so that the two adjacent signals are sent at two continuous time intervals. For example, as shown in FIG. 6.a, the first signal is represented by using a long white block, the second signal is represented by using a long black block, the third signal is represented by using a short block, and an arrow on each block indicates a direction in which a transmission moment of a signal may be adjusted. In a conflict scenario 1 shown in FIG. 7, a sending interval between the first signal and the third signal satisfies *T_{off}* < *T_{off-min}*, to be specific, a transmission conflict occurs between the first signal and the third signal. The adjustment manner includes the following manners:

### 1-1. Adjusting the transmission moment of the first signal:

The sending terminal antedates the transmission moment of the first signal, so that the adjusted first signal and the third signal are sent at two continuous time intervals; or the sending terminal postpones the transmission moment of the first signal, so that the adjusted first signal and the second signal are sent at two continuous time intervals. Optionally, the sending terminal may alternatively postpone the transmission moment of the first signal, so that both the sending interval between the adjusted first signal and the third signal and the sending interval between the first signal and the second signal are greater than the first preset value. This is not specifically limited herein.

### 1-2. Adjusting the transmission moment of the first signal and the transmission moment of the second signal:

The sending terminal adjusts the transmission moment of the first signal and the transmission moment of the second signal, so that the first signal, the second signal, and the third signal are sent at three continuous time intervals. Optionally, the sending terminal may adjust at least two of the first signal, the second signal, and the third signal, so that the first signal, the second signal, and the third signal are sent at three continuous time intervals, and the adjusted third signal may be adjacent only to the first signal, adjacent only to the second signal, or between the first signal and the second signal. This is not specifically limited herein.

### 1-3. Adjusting the transmission moment of the third signal:

The sending terminal antedates the transmission moment of the third signal, so that a sending interval between the adjusted third signal and the first signal is greater than the first preset value.

In a conflict scenario 2 shown in FIG. 6.b, the first signal is represented by using a long white block, the second signal is represented by using a long black block, the third signal is represented by using a short block, and an arrow on each block indicates a direction in which a transmission moment of a signal may be adjusted. A sending interval between the first signal and the second signal is less than the first preset value, and a sending interval between the second signal and the third signal is greater than the first preset value. To be specific, a transmission conflict occurs between the first signal and the second signal. The processing manner includes the following manners:

### 2-1. Discarding the second signal.

### 2-2. Adjusting the transmission moment of the first signal or the second signal.

The sending terminal postpones only the transmission moment of the first signal, so that the adjusted first signal and the second signal are sent at two continuous time intervals; or the sending terminal antedates the transmission moment of the first signal, so that a sending interval between the adjusted first signal and the second signal is greater than the first preset value; or the sending terminal postpones the transmission moment of the first signal and antedates the transmission moment of the second signal; or the sending terminal antedates both the transmission moment of the first signal and the transmission moment of the second signal, so that the adjusted first signal and the adjusted second signal are sent at two continuous time intervals. Therefore, the processing manner of the sending terminal is not specifically limited herein.

407. The sending terminal sends indication information.

After the sending terminal determines the at least one processing manner corresponding to the conflict situation, to ensure that a receiving terminal can correctly receive the processed signal, the sending terminal sends a fourth signal. The fourth signal is transmitted in a previous period of the first signal, and the fourth signal carries the indication information. The indication information is used to indicate the processing manner. When the processing manner includes adjusting the first signal, the fourth signal carries control information and data information. The control information includes one of the following:
1. A first indicator field: The first indicator field is used to indicate an offset by which the transmission moment of the first signal needs to be adjusted, and when an offset value that needs to be adjusted is 0, it indicates that the transmission moment of the first signal does not need to be adjusted.
2. A second indicator field and a third indicator field: The second indicator field is used to indicate whether the transmission moment of the first signal is changed, and the third indicator field is used to indicate an offset by which the transmission moment of the first signal needs to be adjusted. For example, assuming the second indicator field has a length of 1 bit, when a value of the second indicator field is 1, it indicates that the transmission moment of the first signal is to be changed, and a value of the third indicator field is valid, and when the value of the second indicator field is 0, it indicates that the transmission moment of the first signal does not need to be adjusted.
3. A fourth indicator field: The fourth indicator field is used to indicate whether the transmission moment of the first signal needs to be adjusted by a pre-configured offset. For example, assuming the fourth indicator field has a length of 1 bit, when a value of the fourth indicator field is 1, it indicates that the transmission moment of the first signal is adjusted by the pre-configured offset, and when the value of the fourth indicator field is 0, it indicates that the transmission moment of the first signal does not need to be adjusted.

If the processing manner includes adjusting the transmission moment of the third signal, the sending terminal transmits a fifth indicator field on a physical sidelink broadcast channel (Physical Sidelink Broadcast Channer PSBCH). The fifth indicator field is used to indicate whether a resource location of the third signal in a current transmission period is changed. For example, when the fifth indicator field has a length of 1 bit, a value of the fifth indicator field being 1 indicates that the resource location of the third signal in the current transmission period is changed, and the value of the fifth indicator field being 0 indicates that the resource location is not changed.

If the processing manner further includes discarding the second signal, the control information carried in the second signal further includes a sixth indicator field. It may be assumed that when a value of the sixth indicator field is 0, it indicates that the second signal is discarded.

408. The sending terminal sends the two processed adjacent signals.

After processing the at least one of the two adjacent signals in the processing manner, the sending terminal sends the two processed adjacent signals to the receiving terminal.

409. The receiving terminal receives the at least one of the two adjacent signals based on the indication information.

After receiving the indication information sent by the sending terminal, the receiving terminal correctly receives the at least one of the two processed adjacent signals based on the indication information. As shown in FIG. 7, a dashed box indicates a transmission location of the first signal, a relatively small box indicates a transmission location of the third signal, and the sending interval between the first signal and the third signal is less than the first preset value, to be specific, a transmission conflict occurs between the first signal and the third signal. The sending terminal determines that the adjustment manner is postponing the transmission moment of the first signal. Therefore, the sending terminal further adds an offset field to the control information carried in the fourth signal, to indicate an adjustment status of the transmission moment of the first signal. Tsrv is used to indicate a reserved interval. Therefore, the receiving terminal can learn of a location for receiving the first signal based on Tsrv and the offset field.

In this embodiment of this application, when the sending interval between the two adjacent signals that are to be sent at the discontinuous time intervals is less than the first preset value, the sending terminal processes, based on the determined processing manner, the at least one of the two adjacent signals between which the transmission conflict occurs, and the processing manner includes adjusting the transmission moment of the signal. Compared with discarding the third signal in the prior art, in this embodiment of this application, a transmission moment of a signal is adjusted when a transmission conflict occurs, thereby ensuring synchronization performance of the receiving terminal.

In this embodiment of this application, when the sending interval between the two adjacent signals that are to be sent at the discontinuous time intervals is less than the first preset value, the sending terminal determines the processing manner based on the conflict situation in the correspondence between a conflict situation and a processing manner, and processes, in the processing manner, the at least one of the two adjacent signals between which the transmission conflict occurs, and the processing manner includes: adjusting the transmission moment of the signal or discarding the second signal and adjusting the MCS value of the first signal. Compared with discarding the third signal in the prior art, in this embodiment of this application, a transmission moment of a signal is adjusted when a transmission conflict occurs, thereby ensuring the synchronization performance of the receiving terminal, and increasing implementations of this embodiment of this application.

As shown in FIG. 8, another embodiment of a terminal communication method according to the embodiments of this application includes the following steps.

801. A sending terminal determines that a conflict situation exists.

Signals transmitted by the sending terminal include a first signal, a possible second signal, and a third signal. The second signal is a retransmitted signal in the first signal, and the third signal is a signal having a constant period. The sending terminal reserves resources for a plurality of signal transmissions during a signal transmission. Therefore, the sending terminal can pre-determine a conflict situation that is likely to occur, to be specific, the conflict situation is a situation in which a sending interval between two adjacent signals at discontinuous time intervals in a current or future transmission process of each two of the first signal, the possible second signal, and the third signal may be less than the first preset value. The sending terminal determines, based on a parameter of a to-be-sent signal and a signal receiving status, the conflict situation that is likely to occur. The parameter of the to-be-sent signal includes at least one of the following: a start sending moment of the first signal, a resource reservation interval carried in the first signal, a start sending moment of the second signal, a resource reservation interval carried in the second signal, a sending moment of the third signal, or a quantity of resource reservation times. The quantity of the resource reservation times indicates that after a proper resource is selected, a quantity of times for which the sending terminal periodically uses the corresponding resource in a subsequent transmission process, and the corresponding resource is a resource used in a same period in terms of time and at a same location in terms of frequency with a resource selected in an initial transmission. In addition, the signal receiving status includes at least one of the following: a moment at which another sending terminal sends the third signal or a period of the third signal.

802. The sending terminal processes at least one of the two adjacent signals based on the conflict situation.

After determining that the conflict situation exists, the sending terminal processes the at least one of the two adjacent signals. The processing manner includes one or more of the following manners: adjusting the start sending moment of the first signal and/or the start sending moment of the second signal, so that an interval between the two adjacent signals that are to be sent is greater than a preset value, or the two adjacent signals that are to be sent are sent at continuous time intervals, and a same parameter configuration is used in a subsequent transmission; or
adjusting the quantity of resource reservation times, so that a location at which a resource is reserved last time is before occurring of the predicted conflict situation; or
when the predicated conflict situation is to occur, reselecting, by the sending terminal, a resource for transmitting the first signal and/or the second signal, so that the interval between the two signals that are to be sent is greater than the preset value, or the two signals that are to be sent are sent at continuous time intervals.

In the embodiment shown in FIG. 4, the sending terminal determines the adjustment manner by using the correspondence between a conflict situation and a processing manner. The sending terminal may further determine the adjustment manner by using a priority criterion. Specifically, as shown in FIG. 9, another embodiment of a terminal communication method according to the embodiments of this application includes the following steps.

901. A sending terminal determines a conflict situation.

902. The sending terminal obtains a congestion level of a current channel.

In this embodiment, step 901 and step 902 are similar to step 401 and step 402 in FIG. 4, and details are not described herein again.

903. The sending terminal obtains a second priority criterion.

904. The sending terminal determines, in the second priority criterion, a first processing manner with a highest priority in at least one processing manner corresponding to the conflict situation.

After the sending terminal obtains the congestion level of the current channel, if the congestion level of the current channel is a second congestion level, to be specific, when a CBR of the current channel is greater than a second preset value, the sending terminal obtains the second priority criterion from pre-configured or pre-stored information. The second priority criterion includes priority information of the processing manner. A manner of obtaining, by the sending terminal, the second priority criterion further includes receiving broadcast information sent by a base station, and the broadcast information carries the second priority criterion. Therefore, this is not specifically limited herein.

In addition, when the congestion level of the current channel is a first congestion level, to be specific, when the CBR of the current channel is less than the second preset value, the sending terminal obtains, from the broadcast information sent by the base station or from the local pre-configured or pre-stored information, a third priority criterion corresponding to the first congestion level.

Optionally, in actual application, a plurality of congestion levels may respectively correspond to a plurality of priority criteria. For example, a congestion level of a channel is classified into three levels. When the three levels are respectively used to indicate that a CBR of the channel is less than a third preset value, the CBR of the channel is greater than the third preset value and is less than a fourth preset value, and the CBR of the channel is greater than the fourth preset value, the three levels may respectively correspond to a fourth priority criterion, a fifth priority criterion, and a sixth priority criterion, and priority information included in the priority criteria corresponding to the different congestion levels may be the same or different. For example, priority information included in the fifth priority criterion is the same as priority information included in the sixth priority criterion, but is different from priority information included in the fourth priority criterion. Therefore, this is not specifically limited herein.

After obtaining the second priority criterion, the sending terminal determines, in the second priority criterion, the first processing manner with the highest priority in the at least one processing manner corresponding to the conflict situation. If the sending terminal obtains the third priority criterion based on the congestion level of the current channel, the sending terminal also determines, in the third priority criterion, a second processing manner with a highest priority in the at least one processing manner corresponding to the conflict situation. For example, the second priority criterion corresponding to the second congestion level is: discarding a second signal > adjusting a transmission moment of a first signal > adjusting a transmission moment of the second signal > adjusting a transmission moment of a third signal > adjusting the transmission moment of the first signal and the transmission moment of the second signal; and the third priority criterion corresponding to the first congestion level is: adjusting the transmission moment of the first signal > adjusting the transmission moment of the second signal > adjusting the transmission moment of the third signal > adjusting the transmission moment of the first signal and the transmission moment of the second signal > discarding the second signal. If the conflict situation obtained by the sending terminal is that a transmission conflict occurs between the first signal and the third signal and the congestion level of the current channel is the first congestion level, the sending terminal determines, in the third priority criterion corresponding to the first congestion level, that the first processing manner is adjusting the transmission moment of the first signal.

It may be understood that, in a priority criterion, priority information of a processing manner may be defined by a network side device, and priorities of processing manners in a priority criterion, for example, the third priority criterion shown in Table 2, may be classified. Therefore, in the priority criterion, display of the processing manner is not specifically limited herein.

**Table 2**

| Processing manner | Priority level |
|---|---|
| Adjusting the transmission moment of the first signal | First priority level |
| Adjusting the transmission moment of the second signal | Second priority level |
| ... | ... |
| Discarding the second signal | nth priority level |

905. The sending terminal processes at least one of the two adjacent signals based on the processing manner.

906. The sending terminal sends indication information.

907. The sending terminal sends the two processed adjacent signals.

908. A receiving terminal receives the at least one of the two adjacent signals based on the indication information.

In this embodiment of this application, an adjustment manner corresponding to a conflict type is determined based on the priority criterion, thereby increasing implementations of this embodiment of this application.

In this embodiment, step 905 and step 908 are similar to step 406 to step 409 in FIG. 4, and details are not described herein again.

The foregoing describes the terminal communication method in the embodiments of this application. The following describes the terminal according to the embodiments of this application. Referring to FIG. 10, an embodiment of a sending terminal according to the embodiments of this application includes:
a processing unit 1001, configured to: when a sending interval between two adjacent signals that are to be sent at discontinuous time intervals is less than a first preset value, process the two adjacent signals, where a processing manner includes at least one of the following: adjusting a transmission moment of at least one of the two adjacent signals, so that the sending interval between the two adjacent signals is greater than the first preset value; or adjusting a transmission moment of at least one of the two adjacent signals, so that the two adjacent signals are sent at continuous time intervals; or discarding a retransmitted signal in the two adjacent signals.

Optionally, the processing unit 1001 includes:
a determining subunit 10011, configured to determine a conflict situation, where the conflict situation indicates a situation in which the sending interval between the two adjacent signals that are to be sent at the discontinuous time intervals is less than the first preset value; and
a processing subunit 10012, configured to process the two adjacent signals based on the conflict situation.

Optionally, the processing subunit 10012 may further include:
a first determining module 100121, configured to determine, based on a correspondence between a conflict situation and a processing manner, at least one processing manner corresponding to the conflict situation; or
determine a processing manner based on a first priority criterion and the conflict situation, where the first priority criterion includes priority information of each processing manner.

Optionally, the processing subunit 10012 may further include:
a first obtaining module 100122, configured to obtain the correspondence between a conflict situation and a processing manner from pre-configured or pre-stored information; or
receive broadcast information sent by a base station, where the broadcast information carries the correspondence between a conflict situation and a processing manner.

Optionally, the determining subunit 10011 may further include:
a second obtaining module 100111, configured to obtain a congestion level of a current channel; and
an association module 100112, configured to associate types of the two adjacent signals with the congestion level of the current channel to obtain the conflict situation.

Optionally, the first determining module 100121 may further include:
a first obtaining submodule 1001211, configured to: when a CBR of a current channel is greater than a second preset value, obtain a second priority criterion, where the first priority criterion includes the second priority criterion; and a determining submodule 1001212, configured to determine, in the second priority criterion, a first processing manner with a highest priority in an adjustment manner corresponding to the conflict situation, where the first processing manner is the processing manner; or
a first obtaining submodule 1001211, configured to: when a CBR of a current channel is less than a second preset value, obtain a third priority criterion, where the first priority criterion includes the third priority criterion; and a determining submodule 1001212, configured to determine, in the third priority criterion, a second processing manner with a highest priority in an adjustment manner corresponding to the conflict situation, where the second processing manner is the processing manner.

In this embodiment of this application, when the sending interval between the two adjacent signals that are to be sent at the discontinuous time intervals is less than the first preset value, the sending terminal adjusts, based on the determined processing manner, at least one of the two adjacent signals between which a transmission conflict occurs, thereby enriching solutions to a transmission conflict.

Referring to FIG. 11, another embodiment of a sending terminal according to the embodiments of this application includes:
a processing unit 1101, configured to: when a sending interval between two adjacent signals that are to be sent at discontinuous time intervals is less than a first preset value, process the two adjacent signals, where a processing manner includes at least one of the following: adjusting a transmission moment of at least one of the two adjacent signals, so that the sending interval between the two adjacent signals is greater than the first preset value; or adjusting a transmission moment of at least one of the two adjacent signals, so that the two adjacent signals are sent at continuous time intervals; or discarding a retransmitted signal in the two adjacent signals.

Optionally, the processing unit 1101 includes:
a determining subunit 11011, configured to determine a conflict situation, where the conflict situation indicates a situation in which the sending interval between the two adjacent signals that are to be sent at the discontinuous time intervals is less than the first preset value; and
a processing subunit 11012, configured to process the two adjacent signals based on the conflict situation.

Optionally, the sending terminal may further include:
a second adjustment unit 1102, configured to: when the processing manner includes discarding a second signal, adjust a modulation and coding scheme MCS value of data information carried in a first signal.

Optionally, the sending terminal may further include:
a first sending unit 1103, configured to send indication information, where the indication information is used to indicate the processing manner.

Optionally, the first sending unit 1103 may further include:
a sending subunit 11031, configured to send a fourth signal, where control information carried in the fourth signal includes one of the following:
   a first indicator field, where the first indicator field is used to indicate an offset by which a transmission moment of the first signal needs to be adjusted; or
   a second indicator field and a third indicator field, where the second indicator field is used to indicate whether a transmission moment of the first signal is changed, and the third indicator field is used to indicate an offset by which the transmission moment of the first signal needs to be adjusted; or
a fourth indicator field, where the fourth indicator field is used to indicate whether a pre-configured offset by which a transmission moment of the first signal needs to be adjusted.

Optionally, the processing unit 1101 may further include:
a transmission subunit 11013, configured to transmit a fifth indicator field on a physical sidelink broadcast channel PSBCH, where the fifth indicator field is used to indicate that a resource location of a third signal in a current transmission period is changed.

Optionally, the sending terminal may further include:
a second sending unit 1104, configured to send the two processed adjacent signals.

In this embodiment of this application, when the sending interval between the two adjacent signals that are to be sent at the discontinuous time intervals is less than the first preset value, the sending terminal may process, based on the determined processing manner, at least one of the two adjacent signals between which a transmission conflict occurs, thereby enriching solutions to a transmission conflict.

Referring to FIG. 12, an embodiment of a receiving terminal according to the embodiments of this application includes:
a receiving unit 1201, configured to receive indication information sent by a sending terminal, where the indication information is used to indicate a processing manner of two adjacent signals that are to be sent at discontinuous time intervals, where a sending interval between the two adjacent signals is less than a first preset value, and the processing manner includes at least one of the following: adjusting a transmission moment of at least one of the two adjacent signals, so that the sending interval between the two adjacent signals is greater than the first preset value; or adjusting a transmission moment of at least one of the two adjacent signals, so that the two adjacent signals are sent at continuous time intervals; or discarding a retransmitted signal in the two adjacent signals.

Optionally, the receiving unit 1201 may further include:
a receiving subunit 12011, configured to receive broadcast information sent by the sending terminal, where the indication information is included in the broadcast information, the indication information includes a fifth indicator field, the fifth indicator field is used to indicate, to the receiving terminal, that a resource location of a third signal in a current transmission period is changed, and the third signal is a signal having a constant transmission period.

In this embodiment of this application, the receiving terminal receives the indication information, the receiving terminal learns of an adjustment manner determined by the sending terminal, so that steps of this embodiment of this application are more complete.

In FIG. 10 to FIG. 12, the sending terminal and the receiving terminal in the embodiments of this application are described in detail from a perspective of modular functional entities. The following describes the sending terminal and the receiving terminal in the embodiments of the present invention from a perspective of hardware processing.

### 1. Sending terminal

FIG. 13.a is a schematic structural block diagram of a sending terminal according to an embodiment of this application. When integrated units are used, FIG. 13.a is a possible schematic structural diagram of the sending terminal in the foregoing embodiment. The sending terminal 1300 includes: a processing unit 1302 and a communications unit 1303. The processing unit 1302 is configured to control and manage an action of the sending terminal. For example, the processing unit 1302 is configured to support the sending terminal in performing step 401 to step 406 in FIG. 4, and/or is used in other processes of the technology described in this specification. The communications unit 1303 is configured to support the sending terminal in communicating with another network entity, for example, communicating with the receiving terminal or the like shown in FIG. 4. The sending terminal may further include a storage unit 1301, configured to store program code and data of the sending terminal.

The processing module 1302 may be a processor or a controller, such as a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logical device, a transistor logical device, a hardware component, or a combination thereof. The processing module 1302 may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications unit 1303 may be a communications interface, a transceiver, a transceiver circuit, or the like. The communications interface is a collective term, and may include one or more interfaces, for example, transceiver interfaces. The storage unit 1301 may be a memory.

When the processing unit 1302 is a processor, the communications unit 1303 is a communications interface, and the storage unit 1301 is a memory, a coding device in this embodiment of the present invention may be the coding device shown in FIG. 9B.

Referring to FIG. 13.b, the sending terminal 1310 includes: a processor 1312, a communications interface 1313, and a memory 1311. Optionally, the sending terminal 1310 may further include a bus 1314. The communications interface 1313, the processor 1312, and the memory 1311 are connected to each other by using the bus 1314. The bus 1314 may be a peripheral component interconnect (Peripheral Component Interconnect, PCI) bus, an extended industry standard architecture (Extended Industry Standard Architecture, EISA) bus, or the like. The bus 1314 may be classified into an address bus, a data bus, a control bus, and the like. For ease of representation, only one bold line in FIG. 13.b is used to represent the bus, but this does not indicate that there is only one bus or only one type of bus.

The sending terminal shown in FIG. 13.a or FIG. 13.b may be an in-vehicle terminal, a handheld terminal, or the like.

### 2. Receiving terminal

FIG. 14 is a schematic structural diagram of a receiving terminal according to an embodiment of the present invention. The decoding device 1400 may vary greatly due to different configurations or performance, and may include one or more central processing units (Central processing units, CPU) 1401 (for example, one or more processors) and a memory 1409, and one or more storage media 1408 (for example, one or more mass storage devices) storing an application program 1407 or data 1406. The memory 1409 and the storage medium 1408 may be transient storages or persistent storages. The program stored in the storage medium 1403 may include one or more modules (not shown), and each module may include a series of instruction operations for a server. Furthermore, the processor 1401 may be configured to communicate with the storage medium 1403, and execute, on the receiving terminal 1400, the series of instruction operations in the storage medium 1403.

The receiving terminal 1400 may further include one or more power supplies 1404, one or more wired or wireless network interfaces 1405, one or more input/output interfaces 1406, and/or one or more operating systems 1405, for example, Windows Server™, Mac OS X™, Unix™, Linux™, and FreeBSD™.

In the foregoing embodiment, steps performed by the receiving terminal may be based on the receiving terminal structure shown in FIG. 14.

By invoking operation instructions stored in the memory 1409, the processor 1401 is configured to receive indication information sent by a sending terminal, where the indication information is used to indicate a processing manner of two adjacent signals that are to be sent at discontinuous time intervals, where a sending interval between the two adjacent signals is less than a first preset value, and the processing manner includes at least one of the following: adjusting a transmission moment of at least one of the two adjacent signals, so that the sending interval between the two adjacent signals is greater than the first preset value; or adjusting a transmission moment of at least one of the two adjacent signals, so that the two adjacent signals are sent at continuous time intervals; or discarding a retransmitted signal in the two adjacent signals.

Methods or algorithm steps described in combination with the content disclosed in this embodiment of the present invention may be implemented by using hardware, or may be implemented by a processor by executing a software instruction. The software instruction may include a corresponding software module. The software module may be stored in a random access memory (Random Access Memory, RAM for short), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in the control plane network element or the user plane network element. Certainly, the processor and the storage medium may also exist in the control plane network element or the user plane network element as discrete components.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a digital versatile disc (DVD)), a semiconductor medium (for example, a Solid State Disk (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several examples provided in this application, it should be understood that the disclosed system, apparatus, and method may be implemented in other manners. For example, the described apparatuses are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the examples.

In addition, functional units in the examples of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing examples are merely intended for describing the technical solutions of this application, but not for limiting this application. The scope of protection shall be defined by the appended claims.

## Claims

1. A terminal communication method, comprising:
when a sending interval between two adjacent signals that are to be sent at discontinuous time intervals is less than a first preset value, processing (302), by a sending terminal, the two adjacent signals, wherein a processing manner comprises at least one of the following:
adjusting a transmission moment of at least one of the two adjacent signals, so that the sending interval between the two adjacent signals is greater than the first preset value;
adjusting a transmission moment of at least one of the two adjacent signals, so that the two adjacent signals are sent at continuous time intervals; and
discarding a retransmitted signal in the two adjacent signals;
wherein the processing, by a sending terminal, the two adjacent signals comprises:
determining, by the sending terminal, a conflict situation, wherein the conflict situation indicates a situation in which the sending interval between the two adjacent signals that are to be sent at the discontinuous time intervals is less than the first preset value; and
processing, by the sending terminal, the two adjacent signals based on the conflict situation;
wherein the processing, by the sending terminal, the two adjacent signals based on the conflict situation comprises:
determining, by the sending terminal, the processing manner based on a first priority criterion and the conflict situation, wherein the first priority criterion comprises priority information of each processing manner.

2. The method according to claim 1, wherein before the determining, by the sending terminal based on a correspondence between the conflict situation and the processing manner, at least one processing manner corresponding to the conflict situation, the method further comprises:
obtaining, by the sending terminal, the correspondence between the conflict situation and the processing manner from pre-configured or pre-stored information; or
receiving, by the sending terminal, broadcast information sent by a base station, wherein the broadcast information carries the correspondence between the conflict situation and the processing manner.

3. The method according to claim 1, wherein the conflict situation in the correspondence between the conflict situation and the processing manner further comprises a congestion level of a channel, and the congestion level is used to indicate a channel busy ratio CBR of the channel.

4. The method according to claim 3, wherein the determining, by the sending terminal, the conflict situation comprises:
obtaining, by the sending terminal, a congestion level of a current channel; and
associating, by the sending terminal, types of the two adjacent signals with the congestion level of the current channel to obtain the conflict situation.

5. The method according to claim 1, wherein the determining, by the sending terminal, an adjustment manner based on the first priority criterion and the conflict situation comprises:
when a CBR of a current channel is greater than a second preset value, obtaining, by the sending terminal, a second priority criterion, wherein the first priority criterion comprises the second priority criterion; and determining, by the sending terminal in the second priority criterion, the first processing manner with a highest priority in the at least one processing manner corresponding to the conflict situation, wherein the first processing manner is the processing manner; or
when a CBR of a current channel is less than a second preset value, obtaining, by the sending terminal, a third priority criterion, wherein the first priority criterion comprises the third priority criterion; and determining, by the sending terminal in the third priority criterion, a second processing manner with a highest priority in the at least one processing manner corresponding to the conflict situation, wherein the second processing manner is the processing manner.

6. The method according to any one of claims 1 to 5, wherein the processing manner comprises at least one or more of the following optional processing manners: adjusting a transmission moment of a first signal, adjusting a transmission moment of a second signal, or adjusting a transmission moment of a third signal; and the first signal comprises control information and data information, the second signal is a retransmitted signal in the first signal, the third signal is a signal having a constant transmission period, and the first signal, the second signal, or the third signal is comprised in the two adjacent signals.

7. The method according to claim 6, wherein when the two adjacent signals that are to be sent at the discontinuous time intervals comprise the second signal, the optional processing manners further comprises: discarding the second signal.

8. The method according to claim 6, wherein after the determining, by the sending terminal, the conflict situation, the method further comprises:
sending, by the sending terminal, indication information, wherein the indication information is used to indicate the processing manner.

9. The method according to claim 8, wherein the sending, by the sending terminal, indication information comprises:
sending, by the sending terminal, a fourth signal, wherein control information carried in the fourth signal comprises one of the following:
a first indicator field, wherein the first indicator field is used to indicate an offset by which the transmission moment of the first signal needs to be adjusted; or
a second indicator field and a third indicator field, wherein the second indicator field is used to indicate whether the transmission moment of the first signal is changed, and the third indicator field is used to indicate an offset by which the transmission moment of the first signal needs to be adjusted; or
a fourth indicator field, wherein the fourth indicator field is used to indicate whether the transmission moment of the first signal needs to be adjusted by a pre-configured offset.

10. The method according to claim 6, wherein after the processing, by the sending terminal, the two adjacent signals based on the conflict situation, the method further comprises:
transmitting, by the sending terminal, a fifth indicator field on a physical sidelink broadcast channel PSBCH, wherein the fifth indicator field is used to indicate that a resource location of the third signal in a current transmission period is changed.

11. A computer readable storage medium, comprising an instruction, wherein when the instruction is run on a computer, the computer is enabled to perform the method according to any one of claims 1 to 10.

12. A computer program product comprising an instruction, wherein when the computer program product is run on a computer, the computer is enabled to perform the method according to any one of claims 1 to 10.

## Patentansprüche

1. Endgerätkommunikationsverfahren, das umfasst:
wenn ein Sendeintervall zwischen zwei angrenzenden Signalen, die in diskontinuierlichen Zeitintervallen gesendet werden sollen, geringer als ein erster voreingestellter Wert ist, Verarbeiten (302), durch ein Sendeendgerät, der zwei angrenzenden Signale, wobei eine Verarbeitungsart das Folgende umfasst:
Anpassen eines Übertragungsmoments von wenigstens einem der zwei angrenzenden Signale, sodass das Sendeintervall zwischen den zwei angrenzenden Signalen größer als der erste voreingestellte Wert ist;
Anpassen eines Übertragungsmoments von wenigstens einem der zwei angrenzenden Signale, sodass die zwei angrenzenden Signale in kontinuierlichen Zeitintervallen gesendet werden; und/oder
Verwerfen eines erneut übertragenen Signals in den zwei angrenzenden Signalen;
wobei das Verarbeiten, durch ein Sendeendgerät, der zwei angrenzenden Signale umfasst:
Bestimmen, durch das Sendeendgerät, einer Konfliktsituation, wobei die Konfliktsituation eine Situation anzeigt, in der das Sendeintervall zwischen den zwei angrenzenden Signalen, die in den diskontinuierlichen Zeitintervallen gesendet werden sollen, geringer als der erste voreingestellte Wert ist; und
Verarbeiten, durch das Sendeendgerät, der zwei angrenzenden Signale basierend auf der Konfliktsituation;
wobei das Verarbeiten, durch das Sendeendgerät, der zwei angrenzenden Signale basierend auf der Konfliktsituation umfasst:
Bestimmen, durch das Sendeendgerät, der Verarbeitungsart basierend auf einem Kriterium erster Priorität und der Konfliktsituation, wobei das Kriterium erster Priorität Prioritätsinformationen jeder Verarbeitungsart umfasst.

2. Verfahren nach Anspruch 1, wobei das Verfahren vor dem Bestimmen, durch das Sendeendgerät, basierend auf einer Entsprechung zwischen der Konfliktsituation und der Verarbeitungsart, wenigstens einer Verarbeitungsart, die der Konfliktsituation entspricht, ferner umfasst:
Erhalten, durch das Sendeendgerät, der Entsprechung zwischen der Konfliktsituation und der Verarbeitungsart von vorkonfigurierten oder vorgespeicherten Informationen; oder
Empfangen, durch das Sendeendgerät, von Broadcast-Informationen, die durch eine Basisstation gesendet werden, wobei die Broadcast-Informationen die Entsprechung zwischen der Konfliktsituation und der Verarbeitungsart tragen.

3. Verfahren nach Anspruch 1, wobei die Konfliktsituation in der Entsprechung zwischen der Konfliktsituation und der Verarbeitungsart ferner ein Überlastungsniveau eines Kanals umfasst und wobei das Überlastungsniveau verwendet wird, um ein Kanalbelegungsverhältnis *(channel busy ratio* - CBR) des Kanals anzuzeigen.

4. Verfahren nach Anspruch 3, wobei das Bestimmen, durch das Sendeendgerät, der Konfliktsituation umfasst:
Erhalten, durch das Sendeendgerät, eines Überlastungsniveaus eines aktuellen Kanals; und
Zuordnen, durch das Sendeendgerät, von Typen der zwei angrenzenden Signale zu dem Überlastungsniveau des aktuellen Kanals, um die Konfliktsituation zu erhalten.

5. Verfahren nach Anspruch 1, wobei das Bestimmen, durch das Sendeendgerät, einer Anpassungsart basierend auf dem Kriterium erster Priorität und der Konfliktsituation umfasst:
wenn ein CBR eines aktuellen Kanals größer als ein zweiter voreingestellter Wert ist, Erhalten, durch das Sendeendgerät, eines Kriteriums zweiter Priorität, wobei das Kriterium erster Priorität das Kriterium zweiter Priorität umfasst; und
Bestimmen, durch das Sendeendgerät in dem Kriterium zweiter Priorität, der ersten Verarbeitungsart mit einer höchsten Priorität in der wenigstens einen Verarbeitungsart, die der Konfliktsituation entspricht, wobei die erste Verarbeitungsart die Verarbeitungsart ist; oder
wenn ein CBR eines aktuellen Kanals geringer als ein zweiter voreingestellter Wert ist, Erhalten, durch das Sendeendgerät, eines Kriteriums dritter Priorität, wobei das Kriterium erster Priorität das Kriterium dritter Priorität umfasst; und
Bestimmen, durch das Sendeendgerät in dem Kriterium dritter Priorität, einer zweiten Verarbeitungsart mit einer höchsten Priorität in der wenigstens einen Verarbeitungsart, die der Konfliktsituation entspricht, wobei die zweite Verarbeitungsart die Verarbeitungsart ist.

6. Verfahren nach einem der Ansprüche 1 bis 5, wobei die Verarbeitungsart die folgenden optionalen Verarbeitungsarten umfasst:
Anpassen eines Übertragungsmoments eines ersten Signals, Anpassen eines Übertragungsmoments eines zweiten Signals und/oder Anpassen eines Übertragungsmoments eines dritten Signals; und
wobei das erste Signal Steuerinformationen und Dateninformationen umfasst, das zweite Signal ein erneut übertragenes Signal in dem ersten Signal ist, das dritte Signal ein Signal ist, das eine konstante Übertragungsperiode aufweist, und das erste Signal, das zweite Signal oder das dritte Signal in den zwei angrenzenden Signalen enthalten ist.

7. Verfahren nach Anspruch 6, wobei, wenn die zwei angrenzenden Signale, die in den diskontinuierlichen Zeitintervallen gesendet werden sollen, das zweite Signal umfassen, die optionalen Verarbeitungsarten ferner umfassen:
Verwerfen des zweiten Signals.

8. Verfahren nach Anspruch 6, wobei das Verfahren nach dem Bestimmen, durch das Sendeendgerät, der Konfliktsituation ferner umfasst:
Senden, durch das Sendeendgerät, von Anzeigeinformationen, wobei die Anzeigeinformationen verwendet werden, um die Verarbeitungsart anzuzeigen.

9. Verfahren nach Anspruch 8, wobei das Senden, durch das Sendeendgerät, der Anzeigeinformationen umfasst:
Senden, durch das Sendeendgerät, eines vierten Signals, wobei Steuerinformationen, die in dem vierten Signal getragen werden, eines der Folgenden umfassen:
ein erstes Anzeigefeld, wobei das erste Anzeigefeld verwendet wird, um einen Versatz anzuzeigen, durch den das Übertragungsmoment des ersten Signals angepasst werden muss; oder
ein zweites Anzeigefeld und ein drittes Anzeigefeld, wobei das zweite Anzeigefeld verwendet wird, um anzuzeigen, ob das Übertragungsmoment des ersten Signals geändert ist, und wobei das dritte Anzeigefeld verwendet wird, um einen Versatz anzuzeigen, durch den das Übertragungsmoment des ersten Signals angepasst werden muss; oder
ein viertes Anzeigefeld, wobei das vierte Anzeigefeld verwendet wird, um anzuzeigen, ob das Übertragungsmoment des ersten Signals durch einen vorkonfigurierten Versatz angepasst werden muss.

10. Verfahren nach Anspruch 6, wobei das Verfahren nach dem Verarbeiten, durch das Sendeendgerät, der zwei angrenzenden Signale basierend auf der Konfliktsituation ferner umfasst:
Übertragen, durch das Sendeendgerät, eines fünften Anzeigefeldes auf einem physischen Sidelink-Broadcast-Kanal *(physical sidelink broadcast channel* - PSBCH), wobei das fünfte Anzeigefeld verwendet wird, um anzuzeigen, dass ein Ressourcenort des dritten Signals in einer aktuellen Übertragungsperiode geändert wird.

11. Computerlesbares Speichermedium, das eine Anweisung umfasst, wobei, wenn die Anweisung auf einem Computer ausgeführt wird, der Computer aktiviert wird, um das Verfahren nach einem der Ansprüche 1 bis 10 durchzuführen.

12. Computerprogrammprodukt, das eine Anweisung umfasst, wobei, wenn die Anweisung auf einem Computer ausgeführt wird, der Computer aktiviert wird, um das Verfahren nach einem der Ansprüche 1 bis 10 durchzuführen.

## Revendications

1. Procédé de communication de terminal, comprenant :
lorsqu'un intervalle d'envoi entre deux signaux adjacents à envoyer à des intervalles de temps discontinus est inférieur à une première valeur prédéfinie, le traitement (302), par un terminal d'envoi, des deux signaux adjacents, un mode de traitement comprenant :
le réglage d'un moment de transmission d'au moins l'un des deux signaux adjacents, de sorte que l'intervalle d'envoi entre les deux signaux adjacents est supérieur à la première valeur prédéfinie ; et/ou
le réglage d'un moment de transmission d'au moins l'un des deux signaux adjacents, de sorte que les deux signaux adjacents sont envoyés à des intervalles de temps continus ; et/ou
le rejet d'un signal retransmis dans les deux signaux adjacents ;
le traitement, par un terminal d'envoi, des deux signaux adjacents comprenant :
la détermination, par le terminal d'envoi, d'une situation de conflit, la situation de conflit indiquant une situation dans laquelle l'intervalle d'envoi entre les deux signaux adjacents à envoyer aux intervalles de temps discontinus est inférieur à la première valeur prédéfinie ; et
le traitement, par le terminal d'envoi, des deux signaux adjacents en fonction de la situation de conflit ;
le traitement, par le terminal d'envoi, des deux signaux adjacents en fonction de la situation de conflit comprenant :
la détermination, par le terminal d'envoi, du mode de traitement en fonction d'un premier critère de priorité et de la situation de conflit, le premier critère de priorité comprenant des informations de priorité de chaque mode de traitement.

2. Procédé selon la revendication 1, avant la détermination, par le terminal d'envoi en fonction d'une correspondance entre la situation de conflit et le mode de traitement, d'au moins un mode de traitement correspondant à la situation de conflit, le procédé comprenant en outre :
l'obtention, par le terminal d'envoi, de la correspondance entre la situation de conflit et le mode de traitement à partir d'informations préconfigurées ou pré-stockées ; ou
la réception, par le terminal d'envoi, d'informations de diffusion envoyées par une station de base, les informations de diffusion transportant la correspondance entre la situation de conflit et le mode de traitement.

3. Procédé selon la revendication 1, la situation de conflit dans la correspondance entre la situation de conflit et le mode de traitement comprenant en outre un niveau d'encombrement d'un canal, et le niveau d'encombrement étant utilisé pour indiquer un taux d'occupation de canal, CBR, du canal.

4. Procédé selon la revendication 3, la détermination, par le terminal d'envoi, de la situation de conflit comprenant :
l'obtention, par le terminal d'envoi, d'un niveau d'encombrement d'un canal actuel ; et
l'association, par le terminal d'envoi, des types des deux signaux adjacents au niveau d'encombrement du canal actuel pour obtenir la situation de conflit.

5. Procédé selon la revendication 1, la détermination, par le terminal d'envoi, d'un mode de réglage en fonction du premier critère de priorité et de la situation de conflit comprenant :
lorsqu'un CBR d'un canal actuel est supérieur à une seconde valeur prédéfinie, l'obtention, par le terminal d'envoi, d'un deuxième critère de priorité, le premier critère de priorité comprenant le deuxième critère de priorité ; et
la détermination, par le terminal d'envoi dans le deuxième critère de priorité, du premier mode de traitement avec une priorité la plus élevée dans l'au moins un mode de traitement correspondant à la situation de conflit, le premier mode de traitement étant le mode de traitement ; ou
lorsqu'un CBR d'un canal actuel est inférieur à une seconde valeur prédéfinie, l'obtention, par le terminal d'envoi, d'un troisième critère de priorité, le premier critère de priorité comprenant le troisième critère de priorité ; et
la détermination, par le terminal d'envoi dans le troisième critère de priorité, d'un second mode de traitement avec une priorité la plus élevée dans l'au moins un mode de traitement correspondant à la situation de conflit, le second mode de traitement étant le mode de traitement.

6. Procédé selon l'une quelconque des revendications 1 à 5, le mode de traitement comprenant :
le réglage d'un moment de transmission d'un premier signal, le réglage d'un moment de transmission d'un deuxième signal ou le réglage d'un moment de transmission d'un troisième signal ; et/ou
le premier signal comprenant des informations de commande et des informations de données, le deuxième signal étant un signal retransmis dans le premier signal, le troisième signal étant un signal ayant une période de transmission constante et le premier signal, le deuxième signal ou le troisième signal étant compris dans les deux signaux adjacents.

7. Procédé selon la revendication 6, lorsque les deux signaux adjacents à envoyer aux intervalles de temps discontinus comprennent le deuxième signal, les modes de traitement facultatifs comprenant en outre :
le rejet du deuxième signal.

8. Procédé selon la revendication 6, après la détermination, par le terminal d'envoi, de la situation de conflit, le procédé comprenant en outre :
l'envoi, par le terminal d'envoi, d'informations d'indication, les informations d'indication étant utilisées pour indiquer le mode de traitement.

9. Procédé selon la revendication 8, l'envoi, par le terminal d'envoi, d'informations d'indication comprenant :
l'envoi, par le terminal d'envoi, d'un quatrième signal, les informations de commande transportées dans le quatrième signal comprenant l'un des éléments suivants :
un premier champ indicateur, le premier champ indicateur étant utilisé pour indiquer un décalage par lequel le moment de transmission du premier signal doit être réglé ; ou
un deuxième champ indicateur et un troisième champ indicateur, le deuxième champ indicateur étant utilisé pour indiquer si le moment de transmission du premier signal est modifié, et le troisième champ indicateur étant utilisé pour indiquer un décalage par lequel le moment d'émission du premier signal doit être réglé ; ou
un quatrième champ indicateur, le quatrième champ indicateur étant utilisé pour indiquer si le moment de transmission du premier signal doit être réglé par un décalage préconfiguré.

10. Procédé selon la revendication 6, après le traitement, par le terminal d'envoi, des deux signaux adjacents en fonction de la situation de conflit, le procédé comprenant en outre :
la transmission, par le terminal d'envoi, d'un cinquième champ indicateur sur un canal de diffusion de liaison latérale physique, PSBCH, le cinquième champ indicateur étant utilisé pour indiquer qu'un emplacement de ressource du troisième signal dans une période de transmission actuelle est modifié.

11. Support d'informations lisible par ordinateur, comprenant une instruction, lorsque l'instruction est exécutée sur un ordinateur, l'ordinateur étant activé pour effectuer le procédé selon l'une quelconque des revendications 1 à 10.

12. Produit-programme d'ordinateur comprenant une instruction, lorsque le produit-programme d'ordinateur est exécuté sur un ordinateur, l'ordinateur étant activé pour effectuer le procédé selon l'une quelconque des revendications 1 à 10.
